# EUROPÄISCHE PATENTSCHRIFT

(11) **EP 1 156 943 B1**
(45) Veröffentlichungstag und Bekanntmachung des Hinweises auf die Patenterteilung: **17.09.2003**
(21) Anmeldenummer: 00907634.0
(22) Anmeldetag: 25.02.2000
(51) Int. Cl.: B60K 41/20

(54) **VORRICHTUNG UND VERFAHREN ZUM STEUERN DER FAHRGESCHWINDIGKEIT EINES KRAFTFAHRZEUGES**
DEVICE AND METHOD FOR CONTROLLING THE ROAD SPEED OF A MOTOR VEHICLE
PROCEDE ET DISPOSITIF POUR REGULER LA VITESSE DE MARCHE D'UNE AUTOMOBILE

(30) Priorität: 03.03.1999 DE 19909326
(43) Veröffentlichungstag der Anmeldung: 28.11.2001
(73) Patentinhaber: LUCAS INDUSTRIES PUBLIC LIMITED COMPANY, Solihull B90 4LA (GB)
(72) Erfinder: SCHMIDT, Werner, D-56579 Rengsdorf (DE)
(74) Vertreter: Beyer, Andreas, Dr.
(86) Internationale Anmeldenummer: EP0001588
(87) Internationale Veröffentlichungsnummer: WO00051837

(56) Entgegenhaltungen:
- DE-A- 2 420 252
- DE-A- 19 625 919
- US-A- 4 146 108

## Beschreibung

Die Erfindung betrifft eine Vorrichtung und ein Verfahren zum Steuern der Fahrgeschwindigkeit eines Kraftfahrzeuges.

Üblicherweise wird in heutigen Kraftfahrzeugen ein Fahrpedal, auch Gaspedal genannt, zum Steuern der Fahrgeschwindigkeit verwendet, das entgegen seiner Betätigungsrichtung in eine Ruhestellung vorgespannt ist und durch dessen Betätigung das Antriebsmoment bzw. die Antriebsleistung des Kraftfahrzeugmotors erhöht werden kann. Will der Führer des Kraftfahrzeuges die Fahrgeschwindigkeit vermindern, so verringert er die auf das Fahrpedal ausgeübte Betätigungskraft, um das Fahrpedal in Richtung auf oder vollständig in dessen Ruhestellung zurückzubewegen. Reicht dies zur gewünschten Verminderung der Fahrgeschwindigkeit nicht aus, betätigt der Fahrer ein üblicherweise ebenfalls im Kraftfahrzeug vorhandenes Bremspedal.

Aus der DE-A-24 20 252 ist eine Gaspedalanordnung für Kraftfahrzeuge bekannt, bei der sich bei unbelastetem Gaspedal ein Steuerknopf eines Steuerventils in einer ausgefahrenen Stellung befindet, wodurch eine Feststellbremse aktiviert wird. Bei einer leichten Belastung des Gaspedals wird der Steuerknopf in das Steuerventil hineingedrückt, wodurch die Feststellbremse gelöst und das Fahrzeug in einen fahrbereiten Zustand versetzt wird. Durch weiteres Belasten des Gaspedals kann dann nach Belieben Gas gegeben werden.

Der Erfindung liegt die Aufgabe zugrunde, eine Vorrichtung und ein Verfahren anzugeben, die das Steuern der Fahrgeschwindigkeit eines Kraftfahrzeuges vereinfachen.

Diese Aufgabe ist ausgehend von der eingangs genannten, einen Bremskrafterzeuger umfassenden Vorrichtung zum Steuern der Fahrgeschwindigkeit eines Kraftfahrzeuges erfindungsgemäß dadurch gelöst, dass der Bremskrafterzeuger dazu eingerichtet ist, die vorab festgelegte Bremskraft gesteuert aufzubauen, wenn das Fahrpedal seine Ruhestellung erreicht, und/oder die aufgebaute Bremskraft gesteuert abzubauen, wenn das Fahrpedal seine Ruhestellung verlässt. Die vorab festgelegte Bremskraft wird also nicht schlagartig bereitgestellt, sondern beispielsweise gemäß einer vorgegebenen Rampenfunktion hochgefahren. In analoger Weise wird vorzugsweise die aufgebaute Bremskraft gesteuert abgebaut, wenn das Fahrpedal seine Ruhestellung verlässt.

Gemäß einer Alternative der erfindungsgemäßen Vorrichtung ist die Einrichtung zum Erkennen der Ruhestellung des Fahrpedals dazu eingerichtet, den Bremskrafterzeuger bei einer Bewegung des Fahrpedals aus der Ruhestellung in die Neutralstellung dazu zu veranlassen, die vorab festgelegte Bremskraft entsprechend der Fahrpedalbewegung zu verringern und umgekehrt. Auf diese Weise kann ein Fahrer die Bremsfunktion der erfindungsgemäßen Vorrichtung innerhalb der vorgegebenen Grenzen, d.h. bis zur vorab festgelegten Bremskraft, selbst gezielt dosieren, indem er das Fahrpedal mehr oder weniger weit bzw. schnell zwischen der Ruhestellung und der Neutralstellung bewegt. Bei einer solchen Ausführungsform ist die Einrichtung zum Erkennen der Ruhestellung des Fahrpedals als Wegaufnehmer ausgestaltet, beispielsweise als ein Wegpotentiometer.

Gemäß einer einfachen Ausführungsform der Erfindung kann die Einrichtung zum Erkennen der Ruhestellung des Fahrpedals beispielsweise ein Schalter sein, der in der Ruhestellung des Fahrpedals von letzterem betätigt wird und der dem Bremskrafterzeuger ein Signal übermittelt, auf das hin der Bremskrafterzeuger die vorab festgelegte Bremskraft erzeugt. Das Fahrpedal ist aus seiner Ruhestellung in eine Neutralstellung bewegbar, aus der heraus eine weitere Bewegung des Fahrpedals entgegen der Federvorspannung, d.h. in Betätigungsrichtung, zu einer Erhöhung des Antriebsmomentes bzw. der Antriebsleistung des Kraftfahrzeugmotors führt.

Erfindungsgemäß ist somit die dem Fahrpedal herkömmlicherweise zugeordnete Beschleunigungsfunktion durch eine aktive Bremsfunktion ergänzt, wobei diese beiden Funktionen voneinander durch die Neutralstellung des Fahrpedals getrennt sind. In bestimmten Anwendungsfällen kann es jedoch auch vorteilhaft sein, die genannte Bremsfunktion in Betätigungsrichtung des Fahrpedals noch etwas über die Neutralstellung hinaus wirken zu lassen, beispielsweise um am Berg ein Rückrollen des Fahrzeuges sicher zu verhindern.

Die erfindungsgemäße Vorrichtung führt zu einer erheblichen Erleichterung der Fahrzeugbedienung. So ist es im Stop and Go-Verkehr nun nicht mehr erforderlich, den rechten Fuß ständig vom Fahrpedal auf das Bremspedal umzusetzen und umgekehrt, sondern es reicht aus, das Fahrpedal in die Ruhestellung zurückzunehmen. Bei Bergabfahrten, bei denen häufig die Motorbremswirkung nicht dazu ausreicht, das Fahrzeug genügend zu verlangsamen, kann durch einfaches Zurücknehmen des Fahrpedals die Bremsanlage mit der vorab festgelegten Bremskraft betätigt werden. Beim Anhalten an Steigungen wird es gemäß der Erfindung ebenfalls zumeist ausreichen, das Fahrpedal in seine Ruhestellung zurückzunehmen, um das Fahrzeug an einem Zurückrollen zu hindern. Auch ein darauffolgender Anfahrvorgang gestaltet sich komfortabler, denn das Fahrpedal kann zum Lösen der Bremse und Erhöhen des Motorantriebsmomentes aus der Ruhestellung schnell in die Neutralstellung und darüber hinaus bewegt werden, ohne daß wie üblich zunächst der rechte Fuß umgesetzt werden muß (vom Bremspedal auf das Fahrpedal), wodurch dem Fahrzeug praktisch keine Gelegenheit mehr gegeben wird zurückzurollen. Vorteile hat die erfindungsgemäße Vorrichtung auch bei Notbremsungen, da der Bremsvorgang bereits durch das Zurücknehmen des Fahrpedals und somit schneller als bisher üblich eingeleitet wird. Die vorab festgelegte Bremskraft ist erfindungsgemäß normalerweise geringer, meistens sogar deutlich geringer, als die maximal mögliche Bremskraft.

Wie bereits erwähnt, ist die erfindungsgemäße Vorrichtung vorzugsweise so ausgestaltet, daß der Bremskrafterzeuger in der Neutralstellung des Fahrpedals keine oder jedenfalls im wesentlichen keine Bremskraft mehr bereitstellt.

Bei bevorzugten Ausführungsbeispielen der erfindungsgemäßen Vorrichtung wird das Maß der vorab festgelegten Bremskraft in Abhängigkeit bestimmter Parameter variiert. So wird bei einem Ausführungsbeispiel die vorab festgelegte Bremskraft mit steigender Fahrgeschwindigkeit erhöht und umgekehrt. Auf diese Weise wird mittels des Fahrpedals auch bei höheren Fahrgeschwindigkeiten noch eine wirksame Bremsfunktion erhalten.

Bei einem anderen Ausführungsbeispiel wird die Höhe der vorab festgelegten Bremskraft in Abhängigkeit der Art und Weise variiert, in der das Kraftfahrzeug bewegt wird. So wird bei sportlicher Fahrweise die vorab festgelegte Bremskraft höher gewählt als bei gleichmäßiger und schonender Fahrweise.

Bei einem noch anderen Ausführungsbeispiel wird die vorab festgelegte Bremskraft in Abhängigkeit der Geschwindigkeit variiert, mit der das Fahrpedal zurückgenommen wird. Bei einem schnellen Loslassen des Fahrpedals wird dabei die vorab festgelegte Bremskraft höher gewählt als bei einem nur allmählichen Zurücknehmen des Fahrpedals. Der Anhalteweg des Fahrzeuges in Notbremssituationen kann auf diese Weise deutlich verkürzt werden.

Bei einem weiteren Ausführungsbeispiel wird die vorab festgelegte Bremskraft in Abhängigkeit der Neigung der Fahrbahn variiert, auf der sich das Fahrzeug befindet. Mit Neigung ist hierbei ein Gefälle bzw. eine Steigung gemeint. Je größer die Steigung bzw. das Gefälle ist, desto höher wird die vorab festgelegte Bremskraft gewählt.

Die beschriebenen Abhängigkeiten der vorab festgelegten Bremskraft lassen sich mit Vorteil auch kombinieren.

Erfindungsgemäß kann der Bremskrafterzeuger ein fahrerunabhängig betätigbarer Unterdruckbremskraftverstärker, ein hydraulisch oder pneumatisch betätigbarer Bremskraftverstärker, ein Druckspeicher oder eine Pumpe sein, insbesondere die Pumpe eines Bremsschlupfregelsystems, das heutzutage in vielen Kraftfahrzeugen bereits serienmäßig vorhanden ist. Der Bremskrafterzeuger kann aber auch ein elektrisch betriebener Aktor einer Fahrzeugbremse selbst sein.

Um dem Fahrer eines Kraftfahrzeuges den Umgang mit der erfindungsgemäßen Vorrichtung zu erleichtern, ist diese vorzugsweise so ausgestaltet, daß das Maß der federnden Vorspannung des Fahrpedals entgegen der Betätigungsrichtung zunimmt, wenn ausgehend von der Ruhestellung des Fahrpedals die Neutralstellung erreicht ist. Auf diese Weise bekommt der Fahrer eine deutliche Rückmeldung über das Erreichen der Neutralstellung, weil sich ab der Neutralstellung der Widerstand erhöht, den der Fahrer zur weiteren Betätigung des Fahrpedals überwinden muß.

Das zuvor beschriebene Verhalten der erfindungsgemäßen Vorrichtung kann beispielsweise durch ein mit dem Fahrpedal zusammenwirkendes Wegpotentiometer erreicht werden, das eine in Betätigungsrichtung des Fahrpedals wirkende, gefesselte Feder umfaßt. Die Fesselung ist dabei so beschaffen, daß die in Betätigungsrichtung des Fahrpedals wirkende Federkraft nur bis zum Erreichen der Neutralstellung des Fahrpedals wirkt.

Ist neben dem Fahrpedal auch ein Bremspedal vorhanden, dann sind alle Ausführungsformen der erfindungsgemäßen Vorrichtung vorzugsweise durch eine weitere Einrichtung fortgebildet, die bei einer Betätigung des Bremspedals sicherstellt, daß der Bremskrafterzeuger Bremskraft in Übereinstimmung mit dieser Betätigung erzeugt. Das bedeutet, daß die Bremsfunktion des Fahrpedals deaktiviert wird, wenn der Fahrer das Bremspedal betätigt. Auf diese Weise ist sichergestellt, daß der Fahrer bei Benutzung des Bremspedals die Bremskraft wie gewohnt im über den gesamten Bremskraftbereich dosieren kann.

Mit der vorgenannten, weiteren Einrichtung oder einer zusätzlichen Einrichtung kann die erfindungsgemäße Vorrichtung auch so weitergebildet sein, daß die Bremsfunktion des Fahrpedals abgeschaltet wird, wenn beispielsweise ein Fahrdynamikregel-System des Fahrzeuges in Aktion tritt. Obwohl die Einrichtung bzw. die Einrichtungen in ihrer einfachsten Ausführungsform durch einen Schalter oder ein Wegpotentiometer realisiert sein können, ist bei bevorzugten Ausführungsbeispielen zur Realisierung der komplexeren Verhaltensweisen ein vorzugsweise elektronisches Steuergerät vorhanden. Dieses Steuergerät kann auch mit Sensoren anderer Fahrzeugsysteme kommunizieren, beispielsweise mit den Sensoren eines Fahrdynamikregelsystems, und die Signale dieser Sensoren können zur Variierung der vorab festgelegten Bremskraft und zur Modifizierung der Funktion herangezogen werden, mit der diese Bremskraft auf- und/oder abbgebaut wird. Das Steuergerät kann ein entsprechend modifiziertes, bereits vorhandenes Steuergerät der Bremsanlage sein.

Die eingangs genannte Aufgabe ist erfindungsgemäß auch durch ein Verfahren zum Steuern der Fahrgeschwindigkeit eines Kraftfahrzeuges gelöst, das eine Bremsanlage und ein Fahrpedal aufweist, welches entgegen seiner Betätigungsrichtung in eine Ruhestellung vorgespannt ist und durch dessen Betätigung die momentane Antriebsleistung des Kraftfahrzeugantriebs verändert werden kann, mit den Schritten:
- Einkoppeln einer vorab festgelegten Bremskraft in die Bremsanlage, wenn das Fahrpedal sich in seiner Ruhestellung befindet,
- automatisch gesteuertes Abbauen der in die Bremsanlage eingekoppelten, vorab festgelegten Bremskraft, sobald das Fahrpedal aus seiner Ruhestellung heraus in Richtung einer Neutralstellung bewegt wird, und automatisch gesteuertes Aufbauen der vorgenannten Bremskraft, sobald das Fahrpedal seine Ruhestellung wieder erreicht, und
- Erhöhen der momentanen Antriebsleistung des Kraftfahrzeugantriebs durch Bewegen des Fahrpedals über die Neutralstellung hinaus.

Gemäß einer Alternative ist die eingangs genannte Aufgabe erfindungsgemäß auch durch ein Verfahren zum Steuern der Fahrgeschwindigkeit eines Kraftfahrzeuges gelöst, das eine Bremsanlage und ein Fahrpedal aufweist, welches entgegen seiner Betätigungsrichtung in eine Ruhestellung vorgespannt ist und durch dessen Betätigung die momentane Antriebsleistung des Kraftfahrzeugantriebs verändert werden kann, mit den Schritten:
- Einkoppeln einer vorab festgelegten Bremskraft in die Bremsanlage, wenn das Fahrpedal sich in seiner Ruhestellung befindet,
- Bewegen des Fahrpedals aus der Ruhestellung in eine Neutralstellung und Verringern der in die Bremsanlage eingekoppelten, vorab festgelegten Bremskraft entsprechend der Bewegung des Fahrpedals, derart, daß in der Neutralstellung keine oder im wesentlichen keine Bremskraft mehr in die Bremsanlage eingekoppelt wird,
- Bewegen des Fahrpedals aus der Neutralstellung in die Ruhestellung und Erhöhen der in die Bremsanlage eingekoppelten Bremskraft entsprechend der Bewegung des Fahrpedals bis zur vorab festgelegten Bremskraft, und
- Erhöhen der momentanen Antriebsleistung des Kraftfahrzeugantriebs durch Bewegen des Fahrpedals über die Neutralstellung hinaus.

Wie bereits im Zusammenhang mit der erfindungsgemäßen Vorrichtung beschrieben, wird auch beim erfindungsgemäßen Verfahren die vorab festgelegte Bremskraft vorzugsweise in Abhängigkeit der Fahrgeschwindigkeit und/oder Fahrweise und/oder der Fahrbahnneigung und/oder der Rücknahmegeschwindigkeit des Fahrpedals und/oder weiterer Parameter variiert.

Drei Ausführungsbeispiele einer erfindungsgemäßen Vorrichtung werden im folgenden anhand der beigefügten, schematischen Figuren näher erläutert. Es zeigt:
- Fig. 1: ein erstes Ausführungsbeispiel einer erfindungsgemäßen Vorrichtung zum Steuern der Fahrgeschwindigkeit eines Kraftfahrzeuges in schematischer Darstellung,
- Fig. 2: ein abgewandeltes, zweites Ausführungsbeispiel, und
- Fig. 3: ein dem Ausführungsbeispiel gemäß Fig. 2 ähnliches, drittes Ausführungsbeispiel.

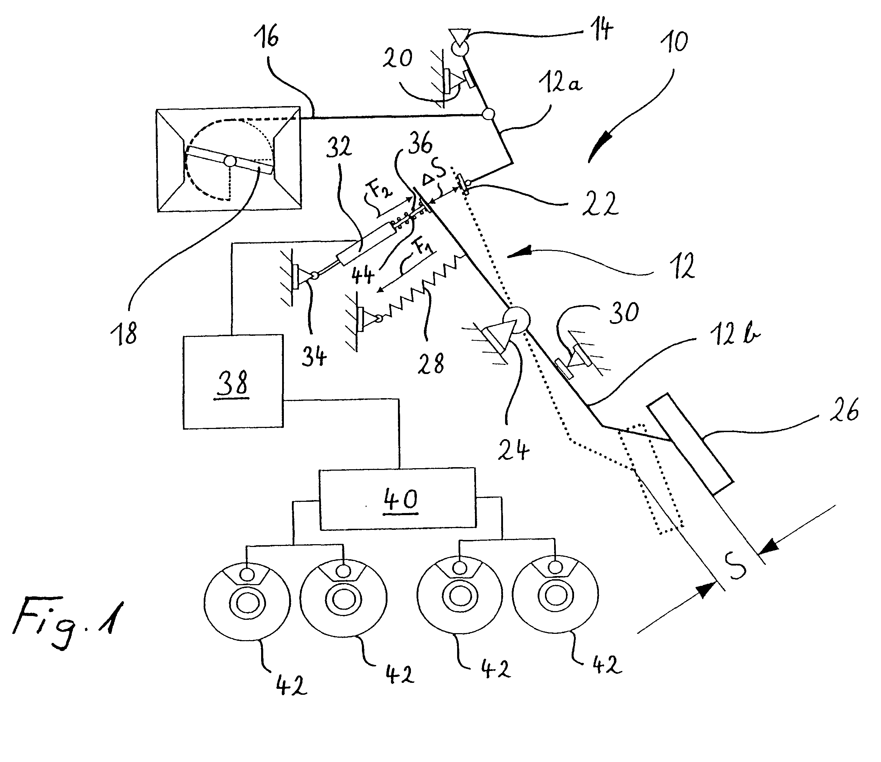

Fig. 1 zeigt schematisch ein erstes Ausführungsbeispiel einer Vorrichtung 10 zum Steuern der Fahrgeschwindigkeit eines Kraftfahrzeuges. Die Vorrichtung 10 umfaßt ein aus zwei Teilen 12a, 12b gebildetes Fahrpedal 12, dessen erster Teil 12a an einem ortsfesten Drehgelenk 14 schwenkbar befestigt und mit einem Bowdenzug 16 zur Betätigung einer Drosselklappe 18 eines nicht weiter dargestellten Verbrennungsmotors verbunden ist. In der unbetätigten Stellung liegt der Teil 12a des Fahrpedals 12 an einem Anschlag 20 an, welcher eine später noch näher erläuterte Neutralstellung festlegt. An seinem freien Ende ist der Teil 12a mit einem hier plattenförmig dargestellten Mitnahmeelement 22 versehen, das zum Zusammenwirken mit dem zweiten Teil 12b des Fahrpedals 12 dient.

Das zweite Teil 12b des Fahrpedals 12 ist, normalerweise im Fußraum des Kraftfahrzeuges, an einem Drehgelenk 24 drehbar befestigt und weist an seinem dem Fahrer zugekehrten Ende wie üblich eine Trittfläche 26 auf. Eine Feder 28 spannt den Teil 12b des Fahrpedals 12 in eine in Fig. 1 mit durchgezogenen Linien wiedergegebene Ruhestellung vor, die durch einen Anschlag 30 definiert ist.

An dem mit dem freien Ende des ersten Teils 12a zusammenwirkenden Ende des Teils 12b ist als Wegaufnehmer ein Wegpotentiometer 32 befestigt, dessen anderes Ende bei 34 an einem Karosserieteil befestigt ist. Das Wegpotentiometer 32 ist mit einer gefesselten Feder 36 versehen, die eine entgegen der Feder 28 wirkende Kraft auf den Teil 12b des Fahrpedals 12 ausübt. Die Fesselung der Feder 36 sorgt dafür, daß die Feder 36 ihre Kraft nur über einen Weg ΔS auf den Teil 12b ausüben kann. Der Weg ΔS entspricht dabei demjenigen Weg S, der vom Teil 12b des Fahrpedals 12 durchlaufen werden muß bzw. um den das Fahrpedal 12 niedergetreten werden muß, um mit dem Teil 12a, genauer mit dem Mitnahmeelement 22, in Kontakt zu kommen.

Das Wegpotentiometer 32 ist darüber hinaus elektrisch mit einem elektronischen Steuergerät 38 verbunden, welches seinerseits elektrisch mit einem Bremskrafterzeuger 40 in Verbindung steht.

Der Bremskrafterzeuger 40, der beispielsweise ein elektromagnetisch betätigbarer Unterdruckbremskraftverstärker oder aber auch die Druckerzeugungspumpe eines Bremsschlupfregelsystems sein kann, steht in üblicher Weise in Verbindung mit hier vier Radbremsen 42, denen der vom Bremskrafterzeuger 40 bereitgestellte Bremsdruck zugeleitet wird.

Die Funktion des ersten Ausführungsbeispieles ist wie folgt: In der in Fig. 1 mit durchgezogenen Linien dargestellten Ruhestellung des Fahrpedals 12 übermittelt das Wegpotentiometer 32 ein dieser Ruhestellung entsprechendes Signal an das Steuergerät 38, welches daraufhin den Bremskrafterzeuger 40 anweist, einen vorab festgelegten Bremsdruck zu erzeugen und den Radbremsen 42 zuzuführen. Wird das Fahrpedal 12 durch einen Tritt auf die Trittfläche 26 betätigt, dreht sich zunächst nur der Teil 12b des Fahrpedals 12 entgegen der Kraft der Feder 28 um das Drehgelenk 24, wobei sich das mit dem Wegpotentiometer 32 zusammenwirkende Ende des Teils 12b dem am Teil 12a angebrachten Mitnahmeelement 22 annähert. Ein Taststift 44 des Wegpotentiometers 32 erfaßt diese Bewegung des Teils 12b und ruft ein sich entsprechend änderndes Signal des Wegpotentiometers 32 hervor, das wiederum dem Steuergerät 38 zugeleitet wird, welches daraufhin den Bremskrafterzeuger 40 anweist, den erzeugten Bremsdruck, der den Radbremsen 42 zugeführt wird, entsprechend zu verringern.

Nimmt der Teil 12b die in Fig. 1 mit gepunkteten Linien wiedergegebene Position ein, ist die Neutralstellung des Fahrpedals 12 erreicht, d.h. der Weg ΔS ist vollständig durchlaufen worden und das mit dem Wegpotentiometer 32 zusammenwirkende Ende des Teils 12b liegt am Mitnahmeelement 22 des Teils 12a an. In dieser Neutralstellung ist das Signal des Wegpotentiometers 32 derart, daß das Steuergerät 38 den Bremskrafterzeuger 40 anweist, den Radbremsen 42 keinen Bremsdruck mehr zuzuführen. Während des Durchlaufens des Weges ΔS wird demnach der den Radbremsen 42 zugeführte Bremsdruck proportional zum sich verringernden Abstand ΔS vermindert.

Bei einer weiteren Betätigung des Teils 12b des Fahrpedals 12 entgegen der Kraft der Feder 28 dreht sich nun das Teil 12a um das Drehgelenk 14, wodurch der Bowdenzug 16 die Drosselklappe 18 zunehmend öffnet und damit die Motorleistung erhöht.

Wird die Betätigung des Fahrpedals 12 zurückgenommen, laufen die zuvor beschriebenen Vorgänge in umgekehrter Reihenfolge ab, d.h. die Drosselklappe 18 wird wieder geschlossen und ab Erreichen der Neutralstellung des Fahrpedals 12 wird ein stetig bis zur Ruhestellung des Fahrpedals 12 anwachsender Bremsdruck den Radbremsen 42 zugeführt.

Ausgehend von der Ruhestellung des Fahrpedals 12 ist das Erreichen der Neutralstellung für einen Fahrer gut spürbar, denn aus der wie oben beschrieben gefesselten Feder 36 resultiert ab der Neutralstellung ein deutlich erhöhter Betätigungswiderstand des Fahrpedals 12, da für eine weitere Betätigung nunmehr die volle Kraft der Feder 28 und auch einer nicht dargestellten, die Drosselklappe 18 in ihre Schließstellung vorspannenden Feder überwunden werden muß.

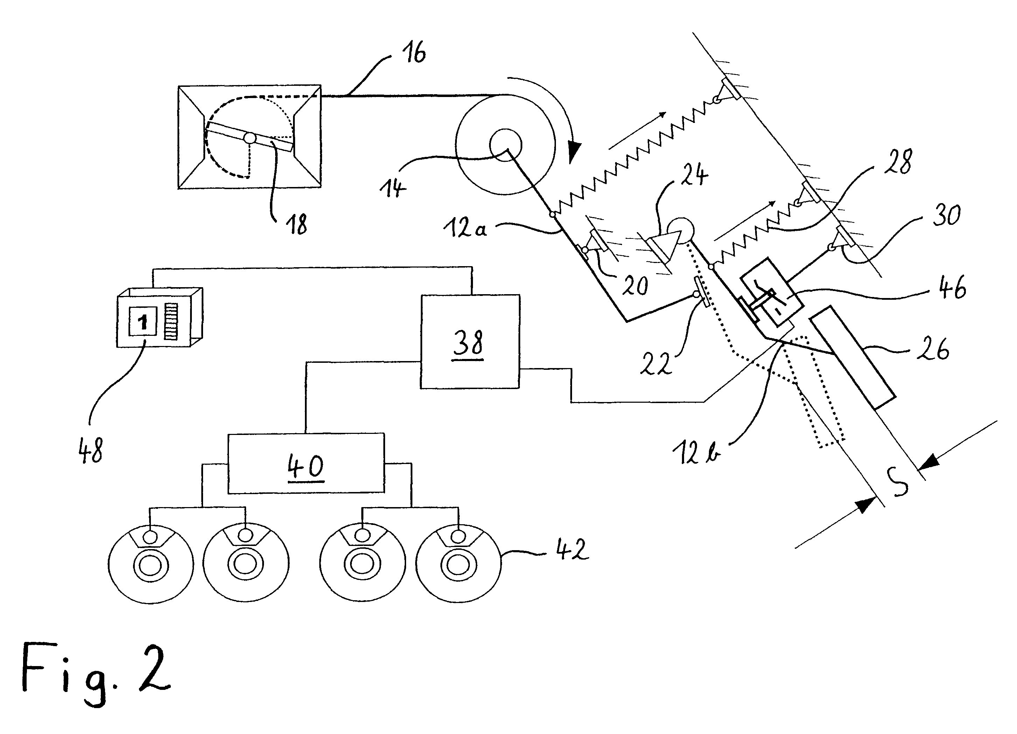

Das in Fig. 2 dargestellte, zweite Ausführungsbeispiel unterscheidet sich vom ersten Ausführungsbeispiel durch eine etwas andere Anordnung der beiden Teile 12a und 12b des Fahrpedals 12 sowie deren Drehgelenke 14 und 24 und insbesondere dadurch, daß statt des Wegpotentiometers 32 ein Schalter 46 verwendet wird. Dieser Schalter 46 sensiert lediglich die Ruhestellung des Fahrpedals 12, d.h. die in Fig. 2 mit durchgezogenen Linien wiedergegebene Position des Teils 12b. In der genannten Ruhestellung gibt der Schalter 46 ein "EIN"-Signal an das Steuergerät 38 ab, woraufhin letzteres den Bremskrafterzeuger 40 anweist, den bestimmten, vorab festgelegten Bremsdruck den Radbremsen 42 zuzuführen.

Bei einer Betätigung des Fahrpedals 12 gemäß dem zweiten Ausführungsbeispiel liefert der Schalter 46 ein "AUS"-Signal an das Steuergerät 38, sobald der Teil 12b des Fahrpedals 12 seine Ruhestellung verlassen hat. Der Bremskrafterzeuger 40 wird daraufhin vom Steuergerät 38 angewiesen, den aufgebauten Bremsdruck gemäß einer vorbestimmten Funktion abzubauen. Diese Funktion kann so gewählt sein, daß der aufgebaute Bremsdruck entweder vor Erreichen der gepunktet wiedergegebenen Neutralstellung, bei Erreichen dieser Neutralstellung, oder erst kurzzeitig nach Erreichen der Neutralstellung vollständig abgebaut ist. Die weitere Betätigung erfolgt analog dem ersten Ausführungsbeispiel.

Bei einem Zurücknehmen des Fahrpedals 12 generiert der Schalter 46 das "EIN"-Signal, sobald der Teil 12b seine Ruhestellung wieder erreicht hat. Auf das "EIN"-Signal hin weist das Steuergerät 38 den Bremskrafterzeuger 40 an, einen Bremsdruck gemäß einer vorgegebenen Funktion, beispielsweise einer Rampenfunktion, aufzubauen und den Radbremsen 42 zuzuführen.

Das zweite Ausführungsbeispiel weist auch eine Einstelleinrichtung 48 auf, mit der sich die Art des Bremsdruckaufbaus und Bremsdruckabbaus und der maximale Bremsdruck einstellen läßt, der in der Ruhestellung des Fahrpedals 12 den Radbremsen 42 zugeführt wird. Die Einstelleinrichtung 48 kann auch Teil des elektronischen Steuergerätes 38 sein und kann darüber hinaus die Funktion, mit der der Bremsdruck auf- bzw. abgebaut wird, selbsttätig in Abhängigkeit bestimmter Parameter verändern, beispielsweise in Abhängigkeit der Fahrgeschwindigkeit, Fahrweise, der Fahrbahnneigung (Gefälle oder Steigung) usw.

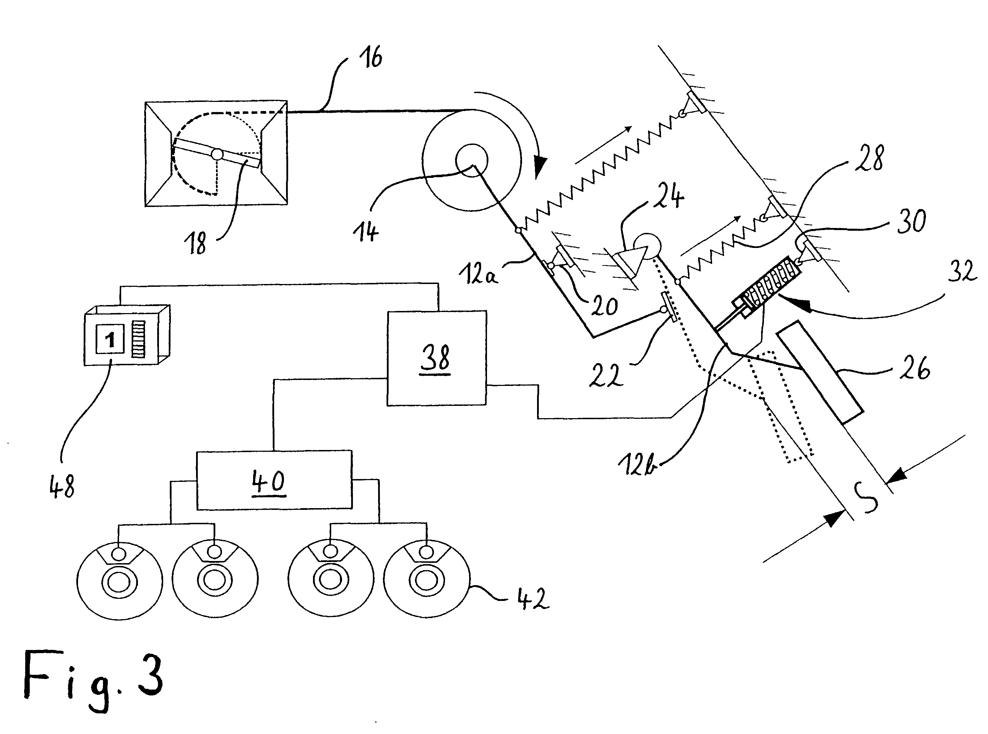

Das in Fig. 3 wiedergegebene, dritte Ausführungsbeispiel unterscheidet sich vom zweiten Ausführungsbeispiel nur dadurch, daß statt des Schalters 46 wieder ein Wegpotentiometer 32 zum Einsatz kommt.

## Patentansprüche

1. Vorrichtung zum Steuern der Fahrgeschwindigkeit eines Kraftfahrzeuges, mit
- einem Fahrpedal (12), das entgegen seiner Betätigungsrichtung federnd in eine Ruhestellung vorgespannt ist und das aus der Ruhestellung in eine Neutralstellung bewegbar ist, aus der heraus eine weitere Bewegung des Fahrpedals (12) entgegen der Federvorspannung zu einer Erhöhung des Antriebsmomentes des Kraftfahrzeugantriebs führt, und
- einer Einrichtung zum Erkennen der Ruhestellung des Fahrpedals (12), die mit einem Bremskrafterzeuger (40) verbunden ist und die in der Ruhestellung des Fahrpedals (12) den Bremskrafterzeuger (40) veranlaßt, eine vorab festgelegte Bremskraft bereitzustellen,
**dadurch gekennzeichnet, daß**
der Bremskrafterzeuger (40) dazu eingerichtet ist, die vorab festgelegte Bremskraft gesteuert aufzubauen, wenn das Fahrpedal (12) seine Ruhestellung erreicht, und/oder die aufgebaute Bremskraft gesteuert abzubauen, wenn das Fahrpedal (12) seine Ruhestellung verläßt.

2. Vorrichtung zum Steuern der Fahrgeschwindigkeit eines Kraftfahrzeuges, mit
- einem Fahrpedal (12), das entgegen seiner Betätigungsrichtung federnd in eine Ruhestellung vorgespannt ist und das aus der Ruhestellung in eine Neutralstellung bewegbar ist, aus der heraus eine weitere Bewegung des Fahrpedals (12) entgegen der Federvorspannung zu einer Erhöhung des Antriebsmomentes des Kraftfahrzeugantriebs führt, und
- einer Einrichtung zum Erkennen der Ruhestellung des Fahrpedals (12), die mit einem Bremskrafterzeuger (40) verbunden ist und die in der Ruhestellung des Fahrpedals (12) den Bremskrafterzeuger (40) veranlaßt, eine vorab festgelegte Bremskraft bereitzustellen,
**dadurch gekennzeichnet, daß**
die Einrichtung zum Erkennen der Ruhestellung des Fahrpedals (12) dazu eingerichtet ist, den Bremskrafterzeuger (40) bei einer Bewegung des Fahrpedals (12) aus der Ruhestellung in die Neutralstellung zu veranlassen, die vorab festgelegte Bremskraft entsprechend der Fahrpedalbewegung zu verringern und umgekehrt.

3. Vorrichtung nach Anspruch 1 oder 2,
**dadurch gekennzeichnet, daß** der Bremskrafterzeuger (40) in der Neutralstellung des Fahrpedals (12) keine Bremskraft mehr bereitstellt.

4. Vorrichtung nach einem der vorhergehenden Ansprüche,
**dadurch gekennzeichnet, daß** die Höhe der vorab festgelegten Bremskraft von der Fahrgeschwindigkeit abhängt.

5. Vorrichtung nach einem der vorhergehenden Ansprüche,
**dadurch gekennzeichnet, daß** die Höhe der vorab festgelegten Bremskraft von der Art und Weise abhängt, in der das Kraftfahrzeug gefahren wird.

6. Vorrichtung nach einem der vorhergehenden Ansprüche,
**dadurch gekennzeichnet, daß** die Höhe der vorab festgelegten Bremskraft von der Geschwindigkeit abhängt, mit der sich das Fahrpedal (12) aus einer betätigten Stellung in die Neutralstellung zurückbewegt.

7. Vorrichtung nach einem der vorhergehenden Ansprüche,
**dadurch gekennzeichnet, daß** der Bremskrafterzeuger (40) ein fahrerunabhängig betätigbarer Unterdruckbremskraftverstärker, ein hydraulisch oder pneumatisch betätigbarer Bremskraftverstärker, ein Druckspeicher, ein elektrisch betriebener Aktor einer Fahrzeugbremse oder eine Pumpe ist, insbesondere die Pumpe eines Bremsschlupfregelsystems.

8. Vorrichtung nach einem der vorhergehenden Ansprüche,
**dadurch gekennzeichnet, daß** das Maß der federnden Vorspannung des Fahrpedals (12) entgegen der Betätigungsrichtung zunimmt, wenn ausgehend von der Ruhestellung des Fahrpedals (12) die Neutralstellung erreicht ist.

9. Vorrichtung nach einem der vorhergehenden Ansprüche,
**dadurch gekennzeichnet, daß** die Einrichtung zum Erkennen der Ruhestellung des Fahrpedals (12) ein insbesondere durch das Fahrpedal (12) betätigbarer Schalter ist.

10. Vorrichtung nach einem der Ansprüche 1 bis 8,
**dadurch gekennzeichnet, daß** die Einrichtung zum Erkennen der Ruhestellung des Fahrpedals (12) ein mit dem Fahrpedal (12) zusammenwirkendes Wegpotentiometer (32) ist.

11. Vorrichtung nach einem der vorhergehenden Ansprüche,
**dadurch gekennzeichnet, daß** neben dem Fahrpedal (12) ein mit dem Bremskrafterzeuger (40) zusammenwirkendes Bremspedal sowie eine Einrichtung vorhanden ist, die bei einer Betätigung des Bremspedals sicherstellt, daß der Bremskrafterzeuger (40) Bremskraft in Übereinstimmung mit dieser Betätigung erzeugt.

12. Verfahren zum Steuern der Fahrgeschwindigkeit eines Kraftfahrzeuges, das eine Bremsanlage und ein Fahrpedal (12) aufweist, welches entgegen seiner Betätigungsrichtung in eine Ruhestellung vorgespannt ist und durch dessen Betätigung die momentane Antriebsleistung des Kraftfahrzeugantriebs verändert werden kann, mit den Schritten:
- Einkoppeln einer vorab festgelegten Bremskraft in die Bremsanlage, wenn das Fahrpedal (12) sich in seiner Ruhestellung befindet,
- automatisches gesteuertes Abbauen der in die Bremsanlage eingekoppelten, vorab festgelegten Bremskraft, sobald das Fahrpedal (12) aus seiner Ruhestellung heraus in Richtung einer Neutralstellung bewegt wird, und automatisches gesteuertes Aufbauen der vorgenannten Bremskraft, sobald das Fahrpedal (12) seine Ruhestellung wieder erreicht, und
- Erhöhen der momentanen Antriebsleistung des Kraftfahrzeugantriebs durch Bewegen des Fahrpedals (12) über die Neutralstellung hinaus.

13. Verfahren zum Steuern der Fahrgeschwindigkeit eines Kraftfahrzeuges, das eine Bremsanlage und ein Fahrpedal (12) aufweist, welches entgegen seiner Betätigungsrichtung in eine Ruhestellung vorgespannt ist und durch dessen Betätigung die momentane Antriebsleistung des Kraftfahrzeugantriebs verändert werden kann, mit den Schritten:
- Einkoppeln einer vorab festgelegten Bremskraft in die Bremsanlage, wenn das Fahrpedal (12) sich in seiner Ruhestellung befindet,
- Bewegen des Fahrpedals (12) aus der Ruhestellung in eine Neutralstellung und Verringern der in die Bremsanlage eingekoppelten, vorab festgelegten Bremskraft entsprechend der Bewegung des Fahrpedals, derart, daß in der Neutralstellung keine oder im wesentlichen keine Bremskraft mehr in die Bremsanlage eingekoppelt wird,
- Bewegen des Fahrpedals (12) aus der Neutralstellung in die Ruhestellung und Erhöhen der in die Bremsanlage eingekoppelten Bremskraft entsprechend der Bewegung des Fahrpedals (12) bis zur vorab festgelegten Bremskraft, und
- Erhöhen der momentanen Antriebsleistung des Kraftfahrzeugantriebs durch Bewegen des Fahrpedals (12) über die Neutralstellung hinaus.

14. Verfahren nach Anspruch 12 oder 13,
**dadurch gekennzeichnet, daß** die vorab festgelegte Bremskraft in Abhängigkeit der Fahrgeschwindigkeit und/oder der Fahrweise und/oder der Fahrbahnneigung und/oder der Rücknahmegeschwindigkeit des Fahrpedals (12) variiert wird.

## Claims

1. Apparatus for controlling the road speed of a motor vehicle, comprising
- an accelerator pedal (12) which is spring-biased counter to its actuating direction into an inoperative position and is movable from the inoperative position into a neutral position from which a further movement of the accelerator pedal (12) counter to the spring bias results in an increase of the drive torque of the motor vehicle drive, and
- a device for detecting the inoperative position of the accelerator pedal (12), which is connected to a braking-force generator (40) and which in the inoperative position of the accelerator pedal (12) causes the braking-force generator (40) to make a predetermined braking force available,
**characterized in that**
the braking-force generator (40) is adapted to build up the predetermined braking force in a controlled manner when the accelerator pedal (12) attains its inoperative position, and/or reduces the built-up braking force in a controlled manner when the accelerator pedal (12) leaves its inoperative position.

2. Apparatus for controlling the road speed of a motor vehicle, comprising
- an accelerator pedal (12) which is spring-biased counter to its actuating direction into an inoperative position and is movable from the inoperative position into a neutral position, from which a further movement of the accelerator pedal (12) counter to the spring bias results in an increase of the drive torque of the motor vehicle drive, and
- a device for detecting the inoperative position of the accelerator pedal (12), which is connected to a braking-force generator (40) and which in the inoperative position of the accelerator pedal (12) causes the braking-force generator (40) to make a predetermined braking force available,
**characterized in that**
the device for detecting the inoperative position of the accelerator pedal (12) is adapted to cause the braking-force generator (40) to reduce the predetermined braking force in accordance with the accelerator pedal movement and vice versa upon a movement of the accelerator pedal (12) from the inoperative position into the neutral position.

3. Apparatus according to claim 1 or 2,
**characterized in that** in the neutral position of the accelerator pedal (12) the braking-force generator (40) does not make any more braking force available.

4. Apparatus according to one of the preceding claims,
**characterized in that** the magnitude of the predetermined braking force is dependent upon the road speed.

5. Apparatus according to one of the preceding claims,
**characterized in that** the magnitude of the predetermined braking force is dependent upon the style in which the motor vehicle is being driven.

6. Apparatus according to one of the preceding claims,
**characterized in that** the magnitude of the predetermined braking force is dependent upon the speed, at which the accelerator pedal (12) moves from an actuated position back into the neutral position.

7. Apparatus according to one of the preceding claims,
**characterized in that** the braking-force generator (40) is a driver-independently actuable vacuum brake booster, a hydraulically or pneumatically actuable brake booster, a pressure accumulator, an electrically operated actuator of a vehicle brake or a pump, in particular the pump of a brake slip control system.

8. Apparatus according to one of the preceding claims,
**characterized in that** the dimension of the spring bias of the accelerator pedal (12) increases counter to actuating direction when, starting from the inoperative position of the accelerator pedal (12), the neutral position is attained.

9. Apparatus according to one of the preceding claims,
**characterized in that** the device for detecting the inoperative position of the accelerator pedal (12) is a switch which is actuable in particular by the accelerator pedal (12).

10. Apparatus according to one of claims 1 to 8,
**characterized in that** the device for detecting the inoperative position of the accelerator pedal (12) is a displacement potentiometer (32) cooperating with the accelerator pedal (12).

11. Apparatus according to one of the preceding claims,
**characterized in that** besides the accelerator pedal (12) there are provided a brake pedal which cooperates with the braking-force generator (40), as well as a device which, upon actuation of the brake pedal, ensures that the braking-force generator (40) generates braking force in accordance with said actuation.

12. Method of controlling the road speed of a motor vehicle, which comprises a brake system and an accelerator pedal (12), which is biased counter to its actuating direction into an inoperative position and through the actuation of which the instantaneous drive power of the motor vehicle drive may be varied, having the steps:
- injecting a predetermined braking force into the brake system when the accelerator pedal (12) is situated in its inoperative position,
- automatically controlled reduction of the predetermined braking force injected into the brake system as soon as the accelerator pedal (12) is moved from its inoperative position towards a neutral position, and automatically controlled build-up of the previously described braking force as soon as the accelerator pedal (12) attains its inoperative position again, and
- increasing the instantaneous drive power of the motor vehicle drive by moving the accelerator pedal (12) beyond the neutral position.

13. Method of controlling the road speed of a motor vehicle, which comprises a brake system and an accelerator pedal (12), which is biased counter to its actuating direction into an inoperative position and through the actuation of which the instantaneous drive power of the motor vehicle drive may be varied, having the steps:
- injecting a predetermined braking force into the brake system when the accelerator pedal (12) is situated in its inoperative position,
- moving the accelerator pedal (12) from the inoperative position into a neutral position and reducing the predetermined braking force injected into the brake system in accordance with the movement of the accelerator pedal, such that in the neutral position no braking force or substantially no braking force is injected into the brake system any longer,
- moving the accelerator pedal (12) from the neutral position into the inoperative position and increasing the braking force injected into the brake system in accordance with the movement of the accelerator pedal (12) up to the predetermined braking force, and
- increasing the instantaneous drive power of the motor vehicle drive by moving the accelerator pedal (12) beyond the neutral position.

14. Method according to claim 12 or 13,
**characterized in that** the predetermined braking force is varied in dependence upon the road speed and/or the driving style and/or the road inclination and/or the speed of easing off the accelerator pedal (12).

## Revendications

1. Dispositif pour commander la vitesse de marche d'un véhicule automobile, avec
- une pédale d'accélérateur (12), qui est précontrainte élastiquement dans sa position de repos à l'encontre de son sens d'actionnement et qui peut être déplacée de sa position de repos vers une position neutre, à partir de laquelle un mouvement supplémentaire de la pédale d'accélérateur (12) à l'encontre de la précontrainte élastique conduit à une augmentation du couple d'entraînement du moteur du véhicule automobile, et
- un dispositif pour reconnaître la position de repos de la pédale d'accélérateur (12), qui est relié à un dispositif de freinage (40) et qui, dans la position de repos de la pédale d'accélérateur (12), amène le dispositif de freinage (40) à générer une force de freinage prédéterminée,
**caractérisé en ce que**
- le dispositif de freinage (40) est conçu de façon à établir par commande la force de freinage prédéterminée, lorsque la pédale d'accélérateur (12) atteint sa position de repos, et/ou à supprimer par commande la force de freinage lorsque la pédale d'accélérateur (12) quitte sa position de repos.

2. Dispositif pour régler la vitesse de marche d'un véhicule automobile, avec
- une pédale d'accélérateur (12), qui est précontrainte élastiquement dans sa position de repos à l'encontre de son sens d'actionnement et qui peut être déplacée de sa position de repos vers une position neutre, à partir de laquelle un mouvement supplémentaire de la pédale d'accélérateur (12) à l'encontre de la précontrainte élastique conduit à une augmentation du couple d'entraînement du moteur du véhicule automobile, et
- un dispositif pour reconnaître la position de repos de la pédale d'accélérateur (12), qui est relié à un dispositif de freinage (40) et qui, dans la position de repos de la pédale d'accélérateur (12), amène le dispositif de freinage (40) à générer une force de freinage prédéterminée,
**caractérisé en ce que**
- le dispositif pour reconnaître la position de repos de la pédale d'accélérateur (12) est conçu de façon à amener le dispositif de freinage (40), lors d'un mouvement de la pédale d'accélérateur (12) de sa position de repos à sa position neutre, à réduire la force de freinage prédéterminée en fonction du mouvement de la pédale d'accélérateur (12) et inversement.

3. Dispositif selon la revendication 1 ou 2, **caractérisé en ce que** le dispositif de freinage (40) ne génère plus aucune force de freinage dans la position neutre de la pédale d'accélérateur (12).

4. Dispositif selon l'une quelconque des revendications précédentes, **caractérisé en ce que** l'intensité de la force de freinage prédéterminée dépend de la vitesse de marche.

5. Dispositif selon l'une quelconque des revendications précédentes, **caractérisé en ce que** l'intensité de la force de freinage prédéterminée dépend de la façon dont le véhicule automobile est conduit.

6. Dispositif selon l'une quelconque des revendications précédentes, **caractérisé en ce que** l'intensité de la force de freinage prédéterminée dépend de la vitesse, avec laquelle la pédale d'accélérateur (12) revient d'une position d'activation à la position neutre.

7. Dispositif selon l'une quelconque des revendications précédentes, **caractérisé en ce que** le dispositif de freinage (40) est un dispositif servo-frein à dépression, actionnable indépendamment du conducteur, un dispositif servo-frein actionnable par voie hydraulique ou pneumatique, un réservoir sous pression, un actionneur à commande électrique d'un frein de véhicule ou une pompe, en particulier la pompe d'un système régulateur de glissement de freinage.

8. Dispositif selon l'une quelconque des revendications précédentes, **caractérisé en ce que** l'intensité de la précontrainte élastique de la pédale d'accélérateur (12) augmente dans le sens opposé au sens d'actionnement, lorsque la position neutre est atteinte en partant de la position de repos de la pédale d'accélérateur (12).

9. Dispositif selon l'une quelconque des revendications précédentes, **caractérisé en ce que** le dispositif pour reconnaître la position de repos de la pédale d'accélérateur (12) est un commutateur actionnable en particulier par la pédale d'accélérateur (12).

10. Dispositif selon l'une quelconque des revendications 1 à 8, **caractérisé en ce que** le dispositif pour reconnaître la position de repos de la pédale d'accélérateur (12) est un potentiomètre de course (32) coopérant avec la pédale d'accélérateur (12).

11. Dispositif selon l'une quelconque des revendications précédentes, **caractérisé en ce que**, à côté de la pédale d'accélérateur (12), il est prévu une pédale de frein coopérant avec le dispositif de freinage (40), ainsi qu'un dispositif qui, lors d'un actionnement de la pédale de frein, assure que le dispositif de freinage (40) produit une force de freinage en accord avec cet actionnement

12. Procédé pour commander la vitesse de marche d'un véhicule automobile, qui présente un dispositif de freinage et une pédale d'accélérateur (12), précontrainte dans sa position de repos à l'encontre de son sens d'actionnement et par l'actionnement de laquelle la puissance d'entraînement instantanée du moteur du véhicule automobile peut être modifiée, procédé comprenant les étapes consistant à:
- exercer une force de freinage prédéterminée dans le dispositif de freinage, lorsque la pédale d'accélérateur (12) se trouve dans sa position de repos,
- supprimer automatiquement par commande la force de freinage prédéterminée exercée dans le dispositif de freinage, dès que la pédale d'accélérateur (12) est déplacée de sa position de repos en direction d'une position neutre, et établir automatiquement par commande ladite force de freinage, dès que la pédale d'accélérateur (12) atteint à nouveau sa position de repos, et
- augmenter la puissance d'entraînement instantanée du moteur du véhicule automobile, en déplaçant la pédale d'accélérateur (12) au-delà de la position neutre.

13. Procédé pour commander la vitesse de marche d'un véhicule automobile, qui présente un dispositif de freinage et une pédale d'accélérateur (12), précontrainte dans sa position de repos à l'encontre de son sens d'actionnement et par l'actionnement de laquelle la puissance d'entraînement instantanée du moteur du véhicule automobile peut être modifiée, procédé comprenant les étapes consistant à:
- exercer une force de freinage prédéterminée dans le dispositif de freinage, lorsque la pédale d'accélérateur (12) se trouve dans sa position de repos,
- déplacer la pédale d'accélérateur (12) de la position de repos à une position neutre et diminuer la force de freinage prédéterminée exercée dans le dispositif de freinage en fonction du déplacement de la pédale d'accélérateur, de telle façon que, dans la position neutre, aucune ou pratiquement aucune force de freinage ne soit plus exercée dans le dispositif de freinage,
- déplacer la pédale d'accélérateur (12) de la position neutre à la position de repos et augmenter la force de freinage exercée dans le dispositif de freinage en fonction du déplacement de la pédale d'accélérateur (12) jusqu'à la force de freinage prédéterminée, et
- augmenter la puissance d'entraînement instantanée du moteur du véhicule automobile, en déplaçant la pédale d'accélérateur (12) au-delà de la position neutre.

14. Procédé selon la revendication 12 ou 13,
**caractérisé en ce que** l'on fait varier la force de freinage prédéterminée en fonction de la vitesse de marche et/ou du mode de conduite et/ou de la pente de la chaussée et/ou de la vitesse de retour de la pédale d'accélérateur (12).
